(19) Europäisches Patentamt
European Patent Office
Office européen des brevets

(11) Publication number: **0 352 748 B1**

(12) # EUROPEAN PATENT SPECIFICATION

(45) Date of publication of patent specification: **10.11.93** (51) Int. Cl.[5]: **G11B 11/10**

(21) Application number: **89113711.9**

(22) Date of filing: **25.07.89**

(54) **Magneto-optical recording medium and method of manufacturing the same.**

(30) Priority: **29.07.88 JP 188017/88**

(43) Date of publication of application:
**31.01.90 Bulletin 90/05**

(45) Publication of the grant of the patent:
**10.11.93 Bulletin 93/45**

(84) Designated Contracting States:
**DE FR NL**

(56) References cited:
**US-A- 4 680 742**

**PATENT ABSTRACTS OF JAPAN vol. 11, no. 340 (P-634)(2787) 7 November 1987, & JP-A-62 121945**

**PATENT ABSTRACTS OF JAPAN vol. 11, no. 391 (P-649)(2838) 22 December 1987, & JP-A-61 157347**

(73) Proprietor: **HITACHI, LTD.**
**6, Kanda Surugadai 4-chome**
**Chiyoda-ku, Tokyo 100(JP)**

Proprietor: **Hitachi Maxell Ltd.**
**No 1-1-88, Ushitora**
**Ibaraki-shi**
**Osaka-fu(JP)**

(72) Inventor: **Shigenori, Okamine**
**6-5-2-504 Josuihon-cho**
**Kodaira-shi**
**Tokyo 187(JP)**
Inventor: **Fumiyoshi, Kirino**
**4-7-7-401 Takaidohigashi**
**Suginami-ku**
**Tokyo 168(JP)**
Inventor: **Toshio, Niihara**
**2-6-5 Fujimi**
**Sayama-shi**
**Saitama-ken 350-13(JP)**
Inventor: **Norio, Ohta**
**306-462 Shinkou**
**Iruma-shi**
**Saitama-ken 358(JP)**

(74) Representative: **Strehl Schübel-Hopf Groening & Partner**
**Maximilianstrasse 54**
**D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 352 748 B1

## Description

### BACKGROUND OF THE INVENTION

The present invention relates to a magneto-optical recording medium used in domestic electric appliances, file memories of computers, etc. and, more particularly, to a magneto-optical recording medium having excellent environment resistance, a long life and high reliability, and a method of manufacturing the same.

A magneto-optical recording medium is a high-density, large-capacity and what is called erasable memory on which information is written and read by utilizing a laser beam and is used as a file memory for computers, or a memory for recording music information and pattern information. As a recording film of a magneto-optical recording medium, for example, an amorphous magnetic film composed of a rare earth element and a transition metal, such as TbFeCo, GdTbFeCo, TbCo and GdTbFe, is used. Such a magnetic recording film, however, is disadvantageous in that the characteristics are apt to be deteriorated due to oxidation or the like. Therefore, a magneto-optical recording medium generally adopts a structure in which a dielectric film 6, a magnetic film 7 and a protective dielectric film 8 are laminated on a substrate 5 in that order, as shown in Fig. 2 and as known from US-A-4680742. Sometimes, a reflective metal film, a protective metal film or a protective resin film is further laminated on the protective dielectric film 8. A first reason for providing the dielectric film between the substrate and the magnetic film is that the dielectric film prevents the water in the substrate and oxygen in air, etc. from reaching the magnetic film, thereby suppressing the deterioration of the characteristics of the magnetic film. A second reason for providing the dielectric film between the substrate and the magnetic film is that the apparent Kerr rotation angle of the magnetic film is increased by the multi-interference effect (Kerr enhancing effect) of a laser beam utilizing the difference in refractive index between the substrate and the dielectric film. The result is that it is possible to obtain a high reproducing output at the time of readout of information. In order to obtain the optimum Kerr enhancing effect, the refractive index of the dielectric film must be 1.9 to 2.1.

As the dielectric film which is transparent to a semiconductor laser beam and capable of being laminated on the substrate, oxide dielectric films such as SiO, $SiO_2$, $A\ell_2O_3$ and $ZrO_2$, and nitride dielectric films such as $Si_3N_4$ and $A\ell N$ are preferably used. However, it is known that when an oxide dielectric film such as SiO is used, the free oxygen in the dielectric film diffuses in the magnetic film and oxidizes the magnetic film. On the other hand, since $A\ell N$ has hydrolyzability, the $A\ell N$ dielectric film has a problem in stability. Accordingly, it is desirable to use a nitride dielectric film such as $Si_3N_4$ as the dielectric film for a magneto-optical recording medium.

It is important for the dielectric film to have good adhesion with the substrate. If the adhesion of the dielectric film with the substrate is not good, a laminated film which constitutes the medium peels off during the long-time storage of the magneto-optical recording medium, thereby making writing and readout of information impossible.

As a dielectric film satisfying the above conditions, there are known a dielectric film having a two-layer structure of a silicon nitride layer and a metal oxide layer, as disclosed in Japanese Patent Laid-Open No. 222453/1987, a silicon nitride film provided with an Si underlayer so as to have a two-layer structure, as described in Extended Abstracts of the 34th Spring Meeting, 1987, of the Japan Society of Applied Physics and Related Societies, p. 722, 28p - ZL - 7, and a film of silicon nitride a metal element such as $A\ell$ added, as described in Japanese Patent Laid-Open No. 22458/1986 and Extended Abstracts of the 34th Spring Meeting, 1987, of the Japan Society of Applied Physics and Related Societies p. 724, 28p - ZL- 13.

In the above-described prior art, no consideration has been given to the composition, manufacturing method and manufacturing condition of a dielectric film which is excellent synthetically in the respects of the recording film protective effect and the Kerr enhancing effect of a dielectric film, the adhesion of the dielectric film with the substrate, and the mass productivity of the recording medium. Consequently, it is difficult to simultaneously satisfy good recording and reproducing characteristics and a long life, or the recording medium disadvantageously costs much.

For example, it is preferable in consideration of the mass productivity of a recording medium that the dielectric film has a monolayer structure. When a plastic material is used for the substrate in the above-described prior art, the adhesion between the dielectric film and the substrate cannot be said to be sufficient, so that a peeling is apt to be produced on a laminated film which constitutes the recording medium when it is stored for a long time under a high-temperature and high humidity environment and when external force is applied to the recording medium for one cause or another.

SUMMARY OF THE INVENTION

Accordingly, it is an object of the present invention to eliminate the above-described problems in the prior art and to provide a magneto-optical recording medium which is unlikely to produce a peeling on a laminated film constituting the recording medium, which has both good recording and reproducing characteristics and a long life, and which is suitable for mass production, and a method of manufacturing such a magneto-optical recording medium.

To achieve this aim, the present invention provides a magneto-optical recording medium comprising a dielectric film formed on a transparent substrate and a recording film formed on the dielectric film, the dielectric film being composed of a silicon nitride film containing at least one metal element selected from the group consisting of, Co, Fe, Ni, Mn and Cu.

The total amount of metal element contained in silicon nitride as a dielectric film is preferably 1 to 12 at%. If the amount of metal element in silicon nitride is less than 1 at%, the effect on the prevention of peeling of a laminated film is unfavorably insufficient. On the other hand, if the amount of metal element in silicon nitride exceeds 12 at%, the light transmittance of the silicon nitride film unfavorably greatly lowers.

The refractive index of the film of silicon nitride containing the above-described metal element as the dielectric film is in the range of 1.9 to 2.1. Generally, in order to obtain the Kerr enhancing effect on a magneto-optical recording medium, it is necessary that the refractive index of the dielectric film is higher than the refractive index of the substrate (the refractive index of a glass substrate or a resin substrate is 1.5 to 1.6). However, if the refractive index of the dielectric film is too high, the Kerr enhancing effect sensitively depends upon the thickness of the dielectric film, thereby producing a problem of nonuniformity in the reproducing characteristics in a magneto-optical disk. In due consideration of this fact, the refractive index of the dielectric film is ordinarily set at 1.9 to 2.1. The refractive index of the silicon nitride film can be set at a desired value in the range of 1.9 to 2.1 by controlling the concentration of the metal element added to the silicon nitride film.

Accordingly, the content of the metal element in the silicon nitride of the dielectric film is so determined as to have a desired refractive index in the range of 1 to 12 at%.

The thickness of the dielectric film composed of silicon nitride containing a metal element is preferably 65 to 110 nm. If the thickness is smaller than the above-described range, the protection of the magnetic film is insufficient. If it is necessary that the refractive index exceeding 1.9, as described above, the appropriate thickness for obtaining the Kerr enhancing effect is not more than 110 nm.

The internal stress of the dielectric film composed of silicon nitride containing a metal element is preferably not more than $3 \times 10^8$ $N/m^2$ ($10^9$ $dyn/cm^2$) in absolute value. If the internal stress is a large compressive stress exceeding $3 \times 10^8$ $N/m^2$, peeling of a laminated film is unfavorably apt to caused by the deformation of the substrate due to a change in temperature, moisture absorption and/or dry atmosphere. If the internal stress is a large tensile stress exceeding $3 \times 10^8$ $N/m^2$ (i.e. the internal stress is $-3 \times 10^8$ $N/m^2$), a cracking is also unfavorably apt to be produced on the dielectric film.

The kind of the substrate constituting the magneto-optical recording medium of the present invention is not specified so long as it is transparent and optically homogenous, but a plastic substrate obtained by monoblock molding of polycarbonate, polyolefine or the like by an injection molding method, a light curing plastic substrate using, for example, an ultraviolet light curing acrylic resin, and a thermosetting plastic substrate using an epoxy resin or the like are preferably used.

The dielectric film is preferably formed in the magneto-optical recording medium of the present invention by a reactive sputtering method carried out in a mixed gas of argon and nitrogen using a silicon alloy target containing Si and at least one metal element selected from the group consisting of Co, Fe, Ni, Mn and Cu or a composite target composed of a silicon target with a metal piece containing the above-described metal element disposed thereon. Especially, a good result is obtained in the case of sputtering while using a mixed gas of argon and nitrogen containing 10 to 30 vol%, preferably 15 to 30 vol% of nitrogen (the amount of $N_2$ on the assumption that the total amount of mixed gas is 100%) and at a sputtering gas pressure of 2.0 to 3.0 Pa.

If the nitrogen content in the mixed gas is less than 10 vol%, or the gas pressure is less than 2.0 Pa, the internal compressive stress of the dielectric film is unfavorably raised. On the other hand, if the nitrogen content in the mixed gas exceeds 30 vol%, or the gas pressure exceeds 3.0 Pa, the speed at which th dielectric film grows is greatly reduced, which is also unfavorable.

The same result is obtained by forming the dielectric film while using a sintered target of silicon nitride with the above-described metal element added thereto. In this case, a reactive sputtering method is also preferably carried out in a mixed gas of argon and nitrogen having the above-described composition and at a sputtering gas pressure of 2.0 to 3.0 Pa.

The amount of metal element in the target is so determined as to have a predetermined value in the silicon nitride film formed, and it can be obtained from a simple experiment, if necessary.

A method of manufacturing a magneto-optical recording medium according to the present invention comprises the steps of forming a dielectric film on a transparent substrate and forming a recording film on the dielectric film. For the formation of the dielectric film, the above-described reactive sputtering method is adopted.

In the magneto-optical recording medium of the present invention, at least one layer of a protective film may be provided on the recording film. As the protective film a dielectric film is generally used and, further, an upper protective film composed of, for example, a non-magnetic stainless steel film may be provided on the protective film.

For the recording film, any magneto-optical recording material may be used, and an amorphous magnetic film composed of a rare earth element and a transition metal such as TbFeCo, GdTbFeCo, TbCo and GdTbFe is ordinarily used.

By adding at least one metal element selected from the group consisting of Co, Fe, Ni, Mo, Zn, Cr, Mn, Cu, Pd, Pt, Ag, Au and V to silicon nitride for a dielectric film, the pinhole density of the silicon nitride film is reduced and the adhesion with the substrate is increased. Therefore, the magneto-optical recording medium is not oxidized even after a long-time storage, thereby precluding the possibility of deterioration of the magnetic characteristics and production of a peeling on a laminated film constituting the recording medium.

Furthermore, the dielectric film is formed by a reactive sputtering method carried out in a mixed gas of argon and nitrogen containing 10 to 30 vol% of nitrogen, so that the internal stress of the silicon nitride film is reduced. Therefore, the possibility of deterioration of the magnetic characteristics and production of a peeling on a laminated film caused by the deformation of the substrate due to a change in temperature, moisture absorption, dehydration or some external force is precluded. The internal stress of the silicon nitride film also depends upon the sputtering gas pressure. If the silicon nitride film is formed at a pressure of not less than 2.0 Pa, the silicon nitride film having a specially small internal stress is obtained.

The refractive index of the silicon nitride film obtained by sputtering while using a silicon target which contains no additive in a mixed gas of argon and nitrogen at a gas pressure of not less than 2.0 Pa in the same way as described above is as small as less than 1.9. Addition of the above-described metal to silicon nitride, however, enables the refractive index to increase to not less than 1.9.

Any of the above-described metals added to the silicon nitride film is difficult to react with nitrogen gas. These metals are therefore unlikely to combine with a nitrogen atom in the silicon nitride film, thereby increasing the refractive index of the silicon nitride film. In other words, it is possible to set the refractive index of the silicon nitride film as desired in the range of 1.9 to 2.1 by controlling the concentration of the metal element added. In this way, the deterioration of the reproducing characteristics of the magneto-optical disk is prevented because of the optimum Kerr enhancing effect.

Since the silicon nitride film is a dielectric film having a monolayer structure which does not complicate the film-forming process nor the manufacturing equipment, the present invention is suitable for mass production of a magneto-optical recording medium.

The magneto-optical recording medium of the present invention may adopt the prior art in this field except that the dielectric film provided between the substrate and the magnetic film is composed of the film of silicon nitride containing the above-described metal element. The method of the magneto-optical recording medium of the present invention may also adopt the prior art in this field except that the dielectric film provided between the substrate and the magnetic film is formed by the above-described method.

The above and other objects, features and advantages of the present invention will become clear from the following description of the preferred embodiments thereof, taken in conjunction with the accompanying drawings.

## BRIEF DESCRIPTION OF THE DRAWINGS

Fig. 1 is a schematic sectional view of an embodiment of a magneto-optical disk according to the present invention;

Fig. 2 is a schematic sectional view of a conventional magneto-optical disk;

Fig. 3 is a graph showing the sputtering gas pressure dependence of the internal stress of a silicon nitride film with Co added thereto;

Fig. 4 is a graph showing the relationship between the refractive index and the the $N_2$ gas content (mixing ratio of $N_2$ gas) in the sputtering gas, in films of silicon nitride with various amounts of Co added thereto;

Fig. 5 is a graph showing the sputtering gas pressure dependence of the refractive index of a Co-containing silicon nitride film;

Fig. 6 is a graph showing the relationship between the C/N of another embodiment of a magneto-optical disk according to the present invention and the keeping time in a high-temperature and high-humidity environment;

Fig. 7 is an explanatory view of a bending test of a magneto-optical disk;

Figs. 8a and 8b are explanatory views of the production of peeling on a laminated film in a bending test of a magneto-optical disk;

Fig. 9 shows the relationship between the number of peelings on a laminated film and the amount of bending, in a bending test of a magneto-optical disk employing a silicon nitride film containing each of various metal elements; and

Fig. 10 is a a schematic sectional view of still another embodiment of a magneto-optical disk according to the present invention.

## DESCRIPTION OF THE PREFERRED EMBODIMENTS

### Example 1

A polycarbonate substrate obtained by an injection molding method was used as a plastic substrate 1, and a dielectric film 2 of silicon nitride with a metal element added thereto, a magnetic film 3 of a TbFeCo alloy, a protective film 4 of silicon nitride are laminated on the substrate 1,in that order, thereby producing a magneto-optical disk. The diameter of the polycarbonate substrate 1 was 130 mm, the thickness was 1.2 mm and a guide track for a laser beam is provided on the surface of the substrate 1.

The polycarbonate substrate 1 was first heated to 100 °C in a vacuum of $10^{-2}$ Pa, and held in this state for 5 hours for effecting the dehydration of the substrate. A film 2 (Kerr enhancing film, thickness: 80 nm) of silicon nitride with a metal element added thereto, and a TbFeCo film 3 (magnetic film, thickness: 100 nm) were then laminated subsequently on the substrate 1 by using a radio frequency magnetron sputtering apparatus. On the TbFeCo film 3, a silicon nitride film 4 (thickness: 150 nm) was formed as a protective film. The metal element added to the silicon nitride film 2 was varied. The film 2 of silicon nitride with the metal element added thereto was formed by a reactive sputtering method using an alloy target composed of Si and the corresponding metal element and a mixed gas of argon and nitrogen. The protective film 4 of silicon nitride provided in this embodiment may be dispensed with.

Table 1 shows the results of the environmental test of the magneto-optical disks of this embodiment produced by using the films 2 of silicon nitride with various kinds of metal elements added thereto as the Kerr effect enhancing film, namely, the peeling preventive effects of various metal elements added to silicon nitride for the Kerr enhancing film.

Table 1

| | Metal element added | Content (at%) | Keeping time (h) at 333K and 95% RH | | | | | |
|---|---|---|---|---|---|---|---|---|
| | | | 200 | 600 | 1000 | 1400 | 1800 | 2000 |
| Embodiments | Co | 7 | O | O | O | O | O | O |
| | Zn | 8 | O | O | O | O | O | Δ |
| | Fe | 8 | O | O | O | O | O | O |
| | Ni | 7 | O | O | O | O | O | O |
| | Cr | 6 | O | O | O | O | O | Δ |
| | Mo | 6 | O | O | O | O | O | Δ |
| | Mn | 5 | O | O | O | O | Δ | Δ |
| Reference examples | Aℓ | 8 | O | O | × | | | |
| | Ti | 5 | O | O | × | | | |
| | Zr | 8 | O | × | | | | |
| | None | - | O | × | | | | |

In the environmental test, the magneto-optical recording disk was held at a temperature of 333 K and a relative humidity (RH) of 95% for 200 to 2,000 hours to examine the production of peeling. In Table 1, the mark O indicates that no peeling was produced, Δ that peeling was slightly produced on the outer peripheral portion of the magneto-optical recording disk, and x that peeling was produced.

As shown in Table 1, when the film of silicon nitride with Co, Zn, Fe, Ni, Cr, Mo, or Mn added thereto was used, no laminated film was peeled off or peeling was very slight, if any, even after about 2000-hour storage. All of these elements added are elements which are difficult to react with nitrogen gas. Thus, the use of the silicon nitride film in accordance with the present invention as the Kerr enhancing film has a marked effect on the prevention of peeling of a laminated film. That is, the adhesion of the laminated film with the substrate is enhanced, thereby producing a magneto-optical recording medium having excellent durability. On the other hand, the peeling preventive effect was also observed when Aℓ or Ti was added, which comparatively easily reacts with nitrogen gas, but the effect was not so prominent as in the case of adding the elements in the present embodiment. When Zr, which more easily reacts with nitrogen gas than Aℓ or Ti, was added, the peeling preventive effect was not observed at all.

The refractive index of any of the samples obtained by adding Co, Zn, Fe, Ni, Cr, Mo, or Mn was in the range of 1.9 to 2.1. Thus, a sufficient Kerr enhancing effect was confirmed.

The targets used in the reactive sputtering method in this embodiment were Si alloys containing 10 to 20 at% of the respective metal elements. As the sputtering gas, a mixed gas of Ar + 10% $N_2$ was used and the sputtering gas pressure was 2.0 Pa.

Although the peeling preventive effect was also observed in the case of adding Cu, Pd, Pt, Ag, Au or V, the effect was less marked than in the case of using the film of silicon nitride with Co, Zn, Fe, Ni, Cr, Mo, or Mn added thereto except for adding Cu.

Example 2

Magneto-optical disks were produced in the same way as in Example 1 except that the films of silicon nitride with Co added having a thickness of 80 nm and formed under various sputtering gas conditions were used as the Kerr effect enhancing film. Environmental test was carried out at a temperature of 333 K and an RH of 95%. As the target, Si-16 at% Co alloy was used, and the Co content in the silicon nitride film obtained was 7 at%. The keeping time of each sample in the above-described atmosphere was 2,000 hours.

The sputtering gas conditions and the results of the environmental test are shown in Table 2. The marks O, Δ and × represents the same as in Table 1.

Table 2

| Total sputtering gas pressure (Pa) | Mixing ratio of $N_2$ (vol%) in mixed gas of Ar and $N_2$ | | |
|---|---|---|---|
| | 5% | 10% | 20% |
| 0.67 | × | × | × |
| 1.3 | × | Δ | O |
| 2.0 | Δ | O | O |
| 2.7 | O | O | O |

From Table 2 it is clear that the silicon nitride films formed by using a mixed gas containing not less than 10 vol% of $N_2$ and under a sputtering gas pressure of not less than 2.0 Pa have an especially good effect on the prevention of peeling of a laminated film.

The internal stresses of 7 at% Co-silicon nitride films obtained by using the Ar and $N_2$ mixed gases containing 5 vol% of $N_2$ and 20 vol% of $N_2$, respectively, were measured to obtain the relationship between the internal stress and the sputtering gas pressure of each sample. The results are shown in Fig. 3. A positive value for the internal stress represents a compressive stress, while a negative value represents a tensile stress.

As shown in Table 2, the silicon nitride films formed by using a mixed gas containing not less than 10 vol% of $N_2$ and under a sputtering gas pressure of not less than 2.0 Pa have a sufficient effect on the prevention of peeling of a laminated film. This is considered to be because the Co-containing silicon nitride film which is formed by using a mixed gas of Ar and $N_2$ having a high mixing ratio of $N_2$ and under a high sputtering gas pressure has a small internal stress, as shown in Fig. 3. That is, if there is a large compression stress in the Kerr effect enhancing film in its film-formed state, a laminated film is easily peeled off by the deformation of the substrate due to a change of temperature, moisture absorption and/or dehydration. If there is a large tensile stress in the Kerr effect enhancing film, cracking is easily produced on the film.

From Table 2 and Fig. 3, it is clear that when the absolute value of the internal stress of the Kerr effect enhancing film is not more than $3.0 \times 10^9$ N/m$^2$, an especially good adhesion with the substrate is obtained.

Example 3

Dielectric films were produced in the same way as in Example 1 except for using Si, 6 at% Co-Si, 11 at% Co-Si, 16 at% Co-Si, and 21 at% Co-Si alloys as the respective targets, setting the sputtering gas pressure at 2.7 Pa and varying the mixing ratio of $N_2$ gas in a mixed gas of Ar and $N_2$, and the refractive indexes of the Co-containing silicon nitride films were measured. The mixing ratio of $N_2$ gas is the content of the $N_2$ gas in the mixed gas, and is represented by

$$P_{(N_2)}/P_{(Ar\ +\ N_2)}\ (vol\%),$$

wherein

$$P_{(N_2)}$$

represents the partial pressure of $N_2$ in the mixed gas and $P_{(Ar\ +\ N2)}$ represents the total pressure of the mixed gas. The relationship between the refractive index of the obtained sample, namely the dielectric film and the mixing ratio of $N_2$ is shown in Fig. 4. The Co contents in the Co-containing silicon nitride films obtained by using 6 at% Co-Si, 11 at% Co-Si, 16 at% Co-Si, and 21 at% Co-Si alloys as the respective targets were 3 at%, 5 at%, 7 at% and 12 at%, respectively.

Dielectric films of silicon nitride with Co added thereto were produced in the same way except for using 16 at% Co-Si alloy as the target, setting the mixing ratios of $N_2$ gas in a mixed gas of Ar and $N_2$ at 5 vol%, 10 vol% and 20 vol%, respectively, and varying the sputtering gas pressure. The Co content of each of the films was 7 at%. The refractive indexes of the dielectric films obtained were measured. The relationship between the refractive index and the sputtering gas pressure in each sample is shown in Fig. 5.

As is clear from Figs. 4 and 5 which show the refractive indexes of the Co-containing silicon nitride films formed under the above-described various conditions, it was possible to control the refractive index at a desired value in the range of 1.9 to 2.1 by appropriately controlling the Co concentration, the mixing ratio of $N_2$ gas in the sputtering gas and the sputtering gas pressure. This was the same with the case of using Fe, Ni, Mo, Zn, Cr, Mn, Cu, Pd, Pt, Ag, Au and V as the metal element added to silicon nitride for the Kerr effect enhancing film, namely, the dielectric film. However, when Zr which easily reacts with nitrogen gas was added or no metal element was added, it was difficult to control the refractive index of the silicon nitride film at a desired value in the range of 1.9 to 2.1 by using a mixed gas of argon and nitrogen containing 10 to 30 vol% of nitrogen at a sputtering gas pressure of not less than 2.0 Pa.

Example 4

Magneto-optical disks with silicon nitrides containing 7 at% of Co, 8 at% of Fe and 7 at% of Ni, respectively, were produced in the same way as in Example 1, and the relationship between the keeping time and the C/N (carrier-to-noise ratio) was examined while holding each disk at a temperature of 333 K and an RH of 95%. The results are shown in Fig. 6. In each disk, the reduction of the C/N was not more than 3 dB after 2,000-hour storage, and the magneto-optical recording film protective effect was also very good.

Example 5

The peeling of a laminated film caused by the deformation of the substrate due to an external force was examined. The magneto-optical disks were produced in the same way as in Example 1 and they were subjected to the bending test, as shown in Fig. 7. A strip-shaped test piece 10 of 50 mm long and 10 mm wide was first cut out of each magneto-optical recording disk, and one end thereof was fixed between test piece fixing plates 9 with the laminated film surface 11 faced upward. A push-up plate 12 was then rotated so as to raise the other end of the test piece 10. By such a cantilever deformation of the test piece, a compression stress was applied to the laminated film and a peeling 14 was produced, as shown in Fig. 8a. The number of peelings 14 and the angle 0 of rotation of the push-up plate 12 were examined.

In Fig. 8a, the one-dot chain line 15 denotes the position at which the test piece 10 was fixed, and the broken line 16 the position at which the push-up plate 12 came into contact with the test piece 10.

The portion A in Fig. 8a was enlarged by an optical microscope and the surface of the lamination thereof is shown in Fig. 8b.

Fig. 9 shows the results of the bending test of magneto-optical disks with the nitride films thereof containing 8 at% of Zr, 8 at% of Aℓ, 7 at% of Co, 8 at% of Fe, 7 at% of Ni, 5 at% of Mn and 5 at% of Cu, respectively, based on silicon nitride. In the above portion of each graph, the metal element added to silicon nitride is described. Each abscissa represents the angle of rotation of the push-up plate 12, and each ordinate the number of peelings of a laminated film of the test piece. As is obvious from Fig. 9, when Co, Fe, Hi, Mn and Cu were used as the metal element in accordance with the present invention, a laminated film was unlikely to peel off due to the bending deformation of the substrate. When Mo, Zn, Cr, Pd, Pt, Ag, Au or V was added as the metal element, the peeling preventive effect was also obtained but the effect was less marked.

As shown in Fig. 9, the addition of Aℓ also produced the peeling preventive effect, but it was less marked. In contrast, the addition of Zr produced no peeling preventive effect.

Example 6

A magneto-optical recording medium provided with a reflective metal film was produced. As shown in Fig. 10, on polycarbonate substrate 17 a dielectric film 18 of silicon nitride with a metal element added thereto having a thickness of 80 nm, a magnetic film 19 of a TbFeCo alloy having a thickness of 30 nm, an intermediate dielectric film 20 of silicon nitride having a thickness of 20 nm and a reflective metal film 21 of an alloy of Aℓ and Ti having a thickness of 50 nm were laminated in that order. The same manufacturing method as in Example 1 was adopted.

In this way, three magneto-optical disks having the dielectric films 18 of silicon nitrides with 4 at% of Co, 5 at% of Ni, and 3 at% of Cu, respectively, added thereto were produced and subjected to the same environmental test as in Example 1, namely, test for holing the magneto-optical disks at a temperature of 333 K and an RH of 95%. Even after 2,000 hours, no peeling was produced in a laminated film of any magneto-optical recording disk. On the other hand, when 5 at% Aℓ-silicon nitride film was used, a laminated film was peeled off when it was held for 1,400 hours in the same high-temperature and high-humidity environment. In the magneto-optical recording disk having a dielectric film of silicon nitride with no additive, a laminated film was peeled off when it was held for 800 hours in the same high-temperature and high-humidity environment.

In this way, the same results described above were obtained in the case of a magneto-optical recording medium provided with a reflective metal film.

Although magneto-optical disks were used in these embodiments, similar results were obtained in a magneto-optical recording medium in another form, for example, a magneto-optical card.

In these embodiments, in the process for producing a dielectric film by a reactive sputtering method, a silicon alloy target was used as the target, but similar results were obtained by using a composite target composed of a silicon target with a metal piece of the above-described metal element disposed thereon or a sintered target of silicon nitride with the above-described metal element added thereto.

As has been explained in detail above, since the adhesion between the dielectric film and the substrate is enhanced in a magneto-optical recording medium according to the present invention, it is possible to store the magneto-optical recording medium for a long time without producing the deterioration of the magnetic characteristics or peeling of a laminated film. In particular, even when an external force is applied to a magneto-optical recording medium using a plastic substrate, no laminated film peels off. In addition, since it is very easy to set the refractive index of the dielectric film of the magneto-optical recording medium at the optimum value, i.e, in the range of 1.9 to 2.1, it is possible to produce a magneto-optical recording medium having high reliability which is free of the deterioration of the reproducing characteristics.

Furthermore, since the dielectric film constituting the magneto-optical recording medium has a monolayer structure, which does not complicate the film-forming process nor the manufacturing equipment, the magneto-optical recording medium of the present invention is excellent in mass productivity.

## Claims

1. A magneto-optical recording medium comprising: a transparent substrate (1); a dielectric film (2) provided on said transparent substrate; and a recording film (3) provided on said dielectric film (2); said dielectric film (2) composed of silicon nitride containing an additive; characterised in that said additive is at least one metal element selected from the group consisting of Co, Fe, Ni, Mn and Cu.

2. A magneto-optical recording medium according to Claim 1, wherein the content of said additive in silicon nitride is 1 to 12 at%.

3. A magneto-optical recording medium according to Claim 1, wherein said dielectric film (2) has a refractive index in the range of 1.9 to 2.1.

4. A magneto-optical recording medium according to Claim 1, wherein said dielectric film (2) has an internal stress of not more than $3 \times 10^8$ $N/m^2$ in absolute value.

5. A magneto-optical recording medium according to Claim 1, wherein said transparent substrate (1) is a plastic substrate obtained by monoblock molding employing an injection molding method, a light curing plastic substrate or a thermosetting plastic substrate.

6. A method of manufacturing a magneto-optical recording medium comprising the steps of: forming a dielectric film (2) on a transparent substrate (1); and laminating a recording film (3) on said dielectric film (2); said dielectric film (2) being formed by a reactive sputtering method carried out in an atmosphere of a mixed gas of argon and nitrogen by using a silicon alloy target containing silicon and at least one metal element selected from the group consisting of Co, Fe, Ni, Mn and Cu or a composite target composed of a silicon target with a metal piece of said metal element disposed thereon so as to form a silicon nitride film containing said metal element.

7. A method of manufacturing a magneto-optical recording medium according to Claim 6, wherein the content of nitrogen in said mixed gas is 10 to 30 vol%, and the pressure of said mixed gas is 2.0 to 3.0 Pa.

## Patentansprüche

1. Magnetooptischer Aufzeichnungsträger mit: einem lichtdurchlässigen Substrat (1); einem dielektrischen Film (2), der auf dem lichtdurchlässigen Substrat ausgebildet ist; und einem Aufzeichnungsfilm (3), der auf dem dielektrischen Film (2) ausgebildet ist, wobei der dielektrische Film (2) aus Siliziumnitrid mit einem Zusatz besteht; **dadurch gekennzeichnet**, daß der Zusatz mindestens ein aus der aus Co, Fe, Ni, Mn und Cu bestehenden Gruppe ausgewähltes metallisches Element ist.

2. Magnetooptischer Aufzeichnungsträger nach Anspruch 1, bei dem der Gehalt des Zusatzes in Siliziumnitrid 1 bis 12 Atom-% ist.

3. Magnetooptischer Aufzeichnungsträger gemäß Anspruch 1, bei dem der dielektrische Film (2) einen Brechungsindex im Bereich von 1,9 bis 2,1 hat.

4. Magnetooptischer Aufzeichnungsträger nach Anspruch 1, bei dem der dielektrische Film (2) eine Innenspannung von nicht mehr als absolut $3 \times 10^8$ $N/m^2$ aufweist.

5. Magnetooptischer Aufzeichnungsträger nach Anspruch 1, bei dem das lichtdurchlässige Substrat (1) ein Kunststoffsubstrat, das durch einstückigen Guß unter Verwendung eines Spritzgußverfahrens erhalten wurde, ein lichtaushärtendes Kunststoffsubstrat oder ein wärmeaushärtendes Kunststoffsubstrat ist.

6. Verfahren zum Herstellen eines magnetooptischen Aufzeichnungsträgers mit den folgenden Schritten: Ausbilden eines dielektrischen Films (2) auf einem lichtdurchlässigen Substrat (1); und Auflaminieren eines Aufzeichnungsfilms (3) auf den dielektrischen Film (2); wobei der dielektrische Film (2) durch ein Reaktionssputterverfahren hergestellt wird, das in einer Atmosphäre eines Mischgases aus Argon und Stickstoff unter Verwendung eines Siliziumlegierungstargets, das Silizium und mindestens ein aus der aus Co, Fe, Ni, Mn und Cu bestehenden Gruppe ausgewähltes metallisches Element enthält, oder eines Verbundtargets ausgeführt wird, das aus einem Siliziumtarget mit einem darauf angeordneten Metallstück des metallischen Elements besteht, um einen das metallische Element enthaltenden Siliziumnitridfilm zu bilden.

7. Verfahren zum Herstellen eines magnetooptischen Aufzeichnungsmediums nach Anspruch 6, bei dem der Gehalt von Stickstoff im Mischgas 10 bis 30 Vol.-% und der Druck des Mischgases 2,0 bis 3,0 Pa beträgt.

## Revendications

1. Support d'enregistrement magnéto-optique comprenant : un substrat transparent (1); une pellicule diélectrique (2) disposée sur ledit substrat transparent; et une pellicule d'enregistrement (3) prévue sur ladite pellicule diélectrique (2); ladite pellicule diélectrique (2) constituée de nitrure de silicium contenant un additif; caractérisé en ce que ledit additif est au moins un élément métallique choisi dans le groupe comprenant Co, Fe, Ni, Mn et Cu.

2. Support d'enregistrement magnéto-optique selon la revendication 1, dans lequel la teneur dudit additif dans le nitrure de silicium est comprise entre 1 et 12 % en atomes.

3. Support d'enregistrement magnéto-optique selon la revendication 1, dans lequel ladite pellicule diélectrique (2) possède un indice de réfraction dans la gamme comprise entre 1,9 et 2,1.

4. Support d'enregistrement magnéto-optique selon la revendication 1, dans lequel ladite pellicule diélectrique (2) possède une contrainte intérieure non supérieure à $3 \times 10^8$ $N/m^2$ en valeur absolue.

5. Support d'enregistrement magnéto-optique selon la revendication 1, dans lequel ledit substrat transparent (1) est un substrat en matière plastique formé au moyen d'un moulage monobloc utilisant un

procédé de moulage par injection, d'un substrat en matière plastique durcissant à la lumière ou d'un substrat en matière plastique thermodurcissable.

**6.** Procédé pour fabriquer un support d'enregistrement magnéto-optique comprenant les étapes consistant à : former une pellicule diélectrique (2) sur un substrat transparent (1); et superposer une pellicule d'enregistrement (3) sur ladite pellicule diélectrique (2); ladite pellicule diélectrique (2) étant formée au moyen d'un procédé de pulvérisation réactive mise en oeuvre dans une atmosphère d'un mélange gazeux d'argon et d'azote moyennant l'utilisation d'une cible en alliage de silicium contenant du silicium et au moins un élément métallique choisi dans le groupe comprenant Co, Fe, Ni, Mn et Cu ou une cible composite, sur laquelle est déposée une pièce métallique formée dudit élément métallique, de manière à former une pellicule de nitrure de silicium contenant ledit élément métallique.

**7.** Procédé de fabrication d'un support d'enregistrement magnéto-optique selon la revendication 6, dans lequel la teneur en azote dans ledit mélange gazeux est comprise entre 10 et 30 % en volume et la pression dudit mélange gazeux est comprise entre 2,0 et 3,0 Pa.

FIG. 1

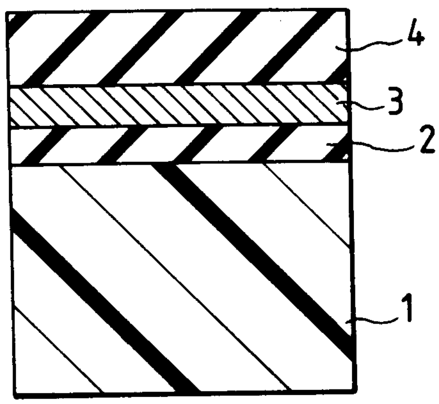


FIG. 2

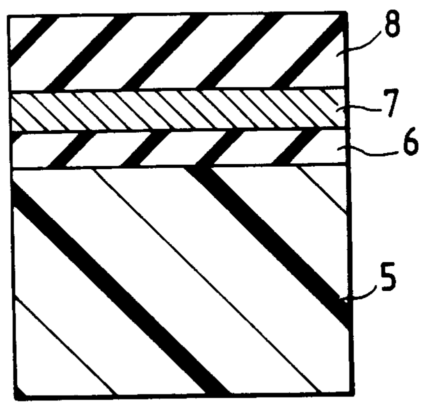


FIG. 3

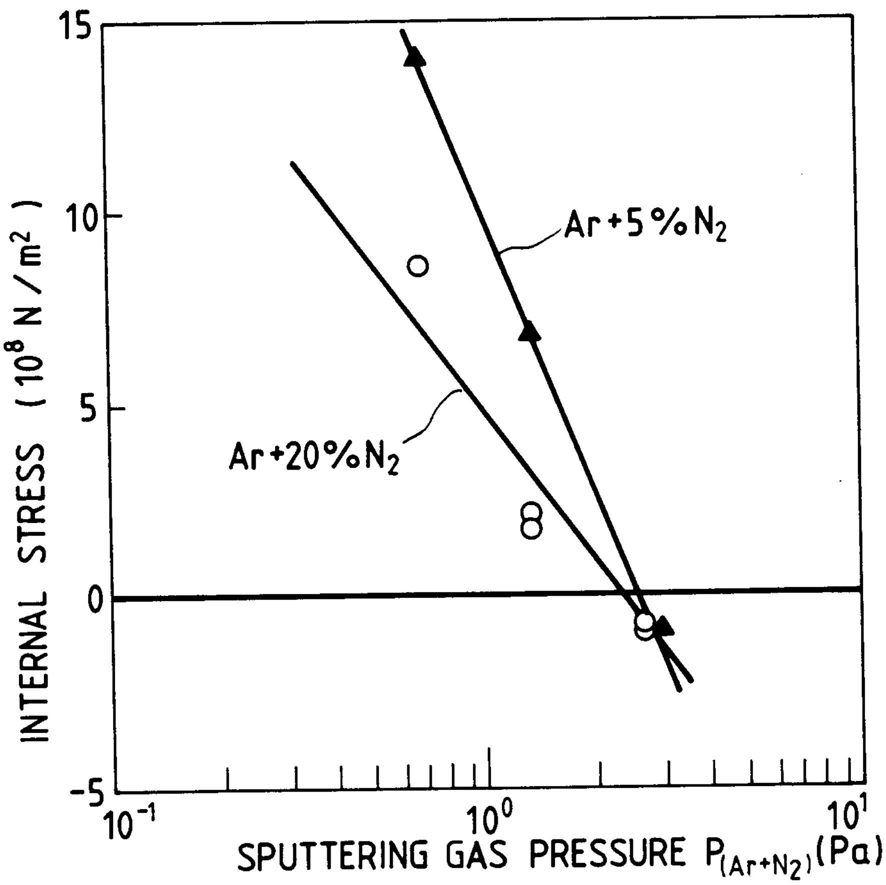

FIG. 4

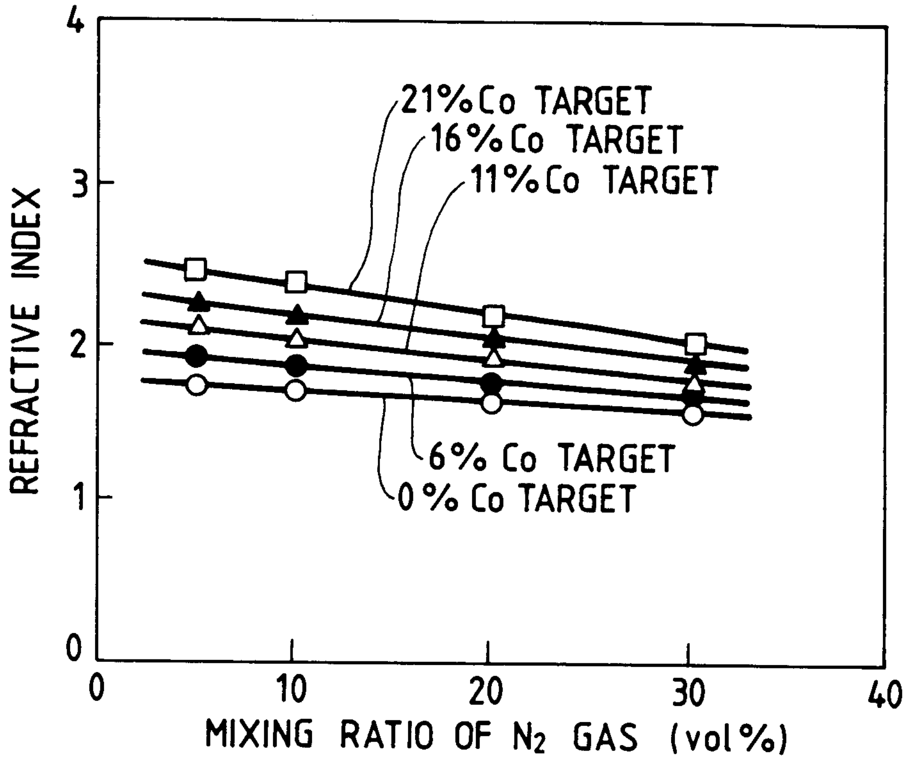
REFRACTIVE INDEX
4
3
2
1
0
21% Co TARGET
16% Co TARGET
11% Co TARGET
6% Co TARGET
0% Co TARGET
0
10
20
30
40
MIXING RATIO OF N2 GAS (vol%)

FIG. 5

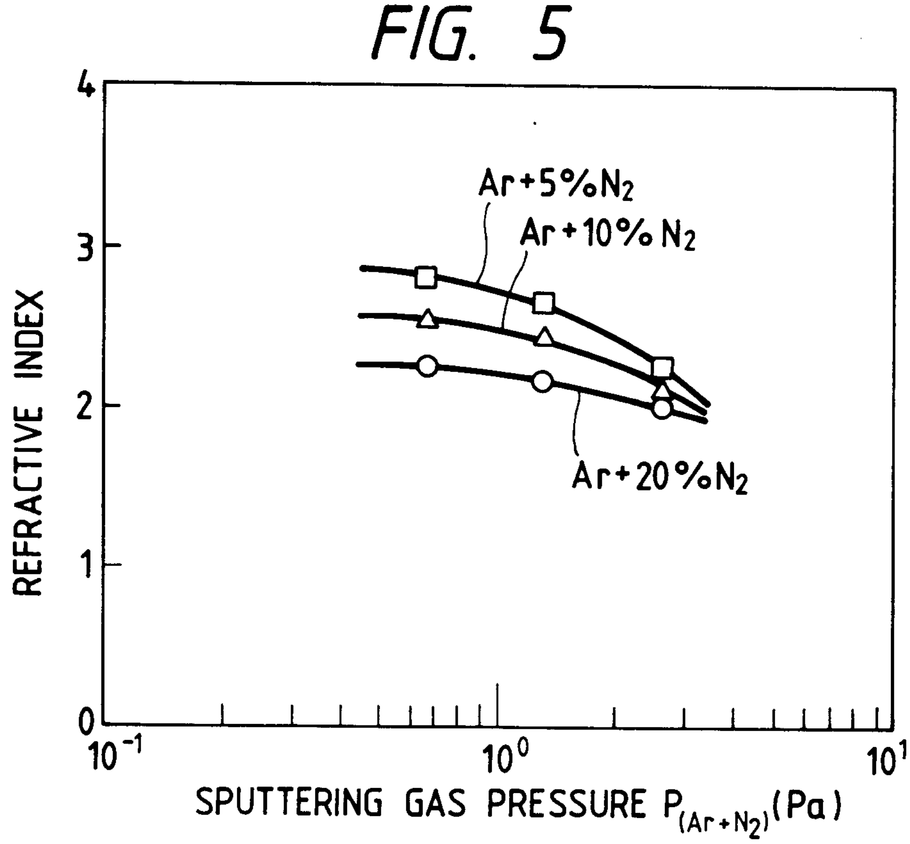
REFRACTIVE INDEX
4
3
2
1
0
Ar+5%N2
Ar+10%N2
Ar+20%N2
10^-1
10^0
10^1
SPUTTERING GAS PRESSURE P(Ar+N2)(Pa)

FIG. 6

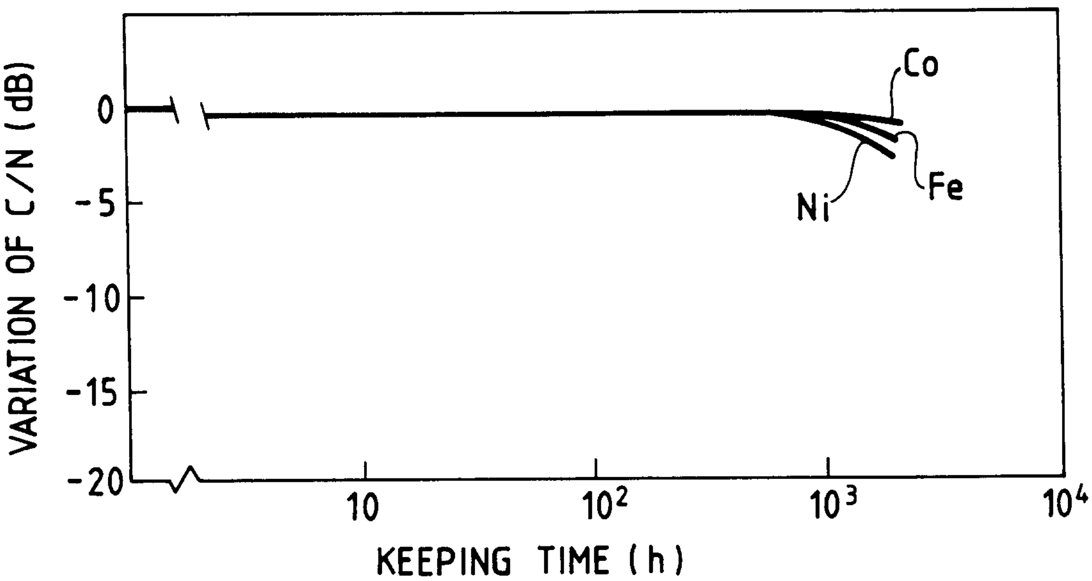
VARIATION OF C/N (dB)
0
-5
-10
-15
-20
10
$10^2$
$10^3$
$10^4$
KEEPING TIME (h)
Co
Fe
Ni

FIG. 7

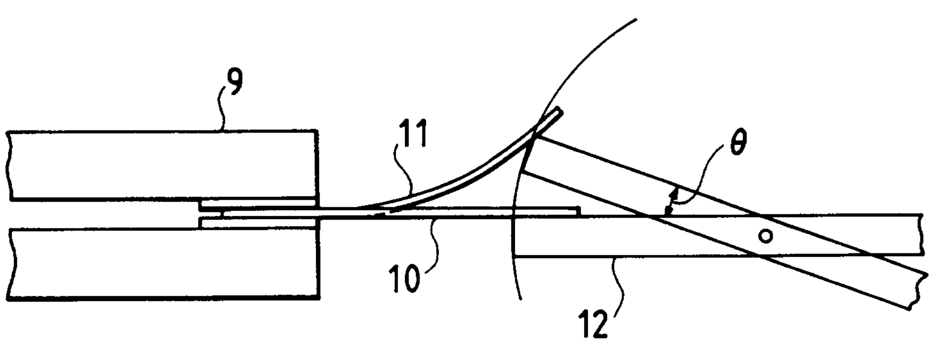
9
11
θ
10
12

FIG. 8a

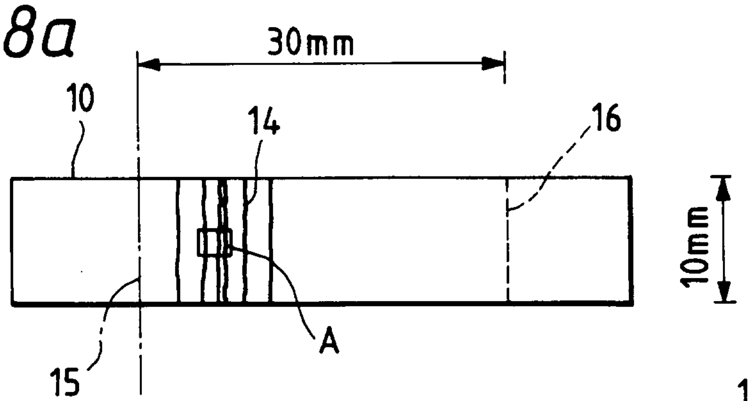


FIG. 8b

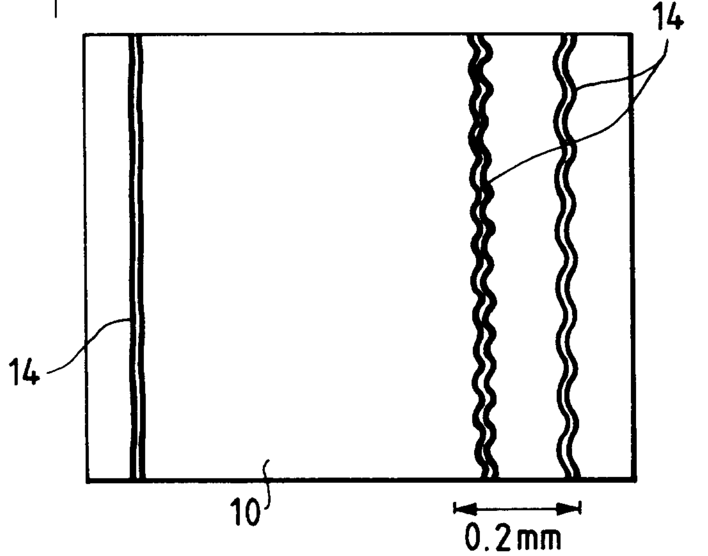


FIG. 10

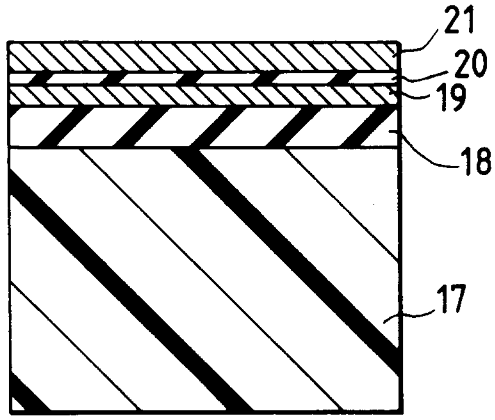

FIG. 9

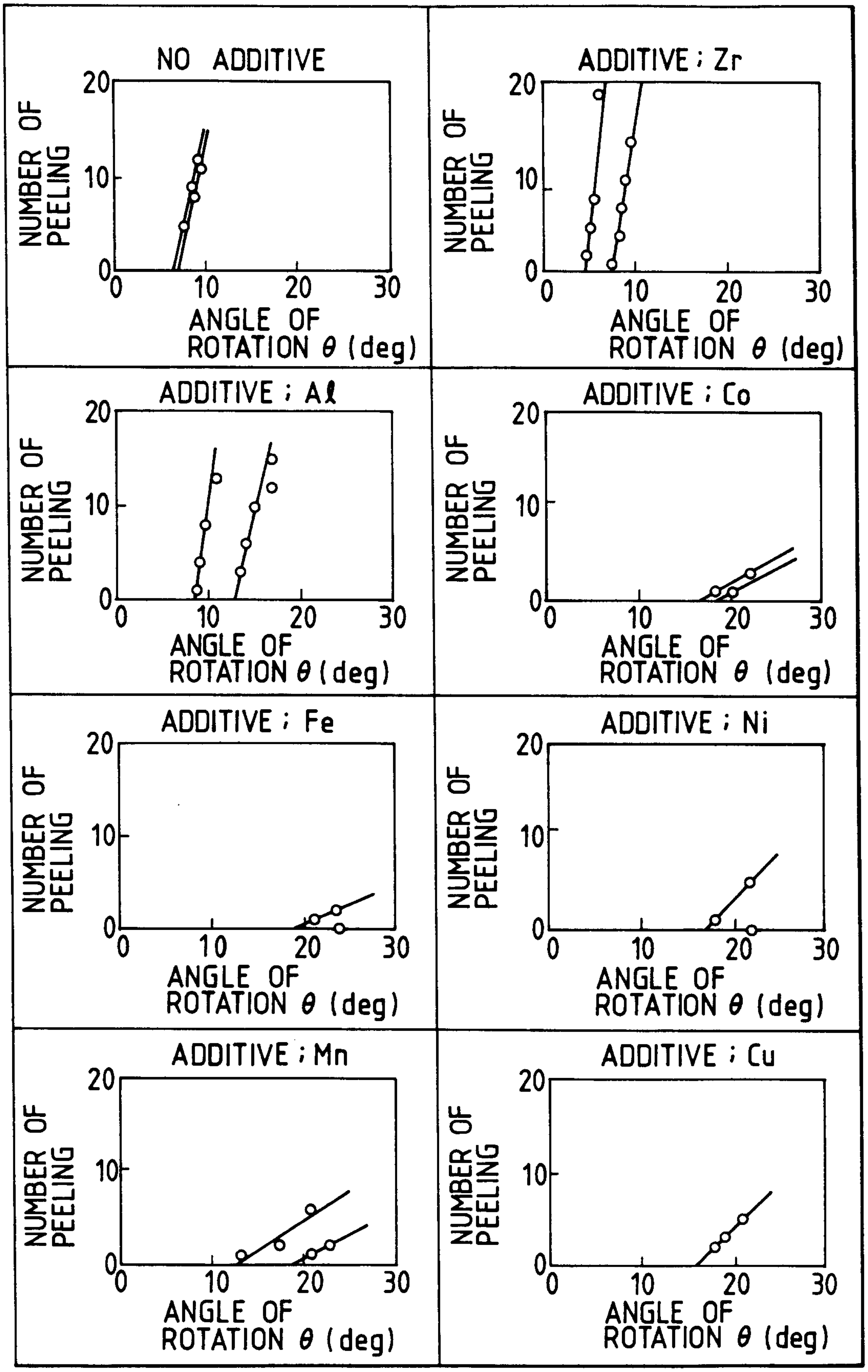
NO ADDITIVE
ADDITIVE ; Zr
ADDITIVE ; Aℓ
ADDITIVE ; Co
ADDITIVE ; Fe
ADDITIVE ; Ni
ADDITIVE ; Mn
ADDITIVE ; Cu
NUMBER OF PEELING
ANGLE OF ROTATION θ (deg)
0
10
20
30